# EUROPÄISCHE PATENTSCHRIFT

(11) **EP 2 528 042 B1**
(45) Veröffentlichungstag und Bekanntmachung des Hinweises auf die Patenterteilung: **18.12.2019**
(21) Anmeldenummer: 11167095.6
(22) Anmeldetag: 23.05.2011
(51) Int. Cl.: G06T 17/20

(54) **Verfahren und Vorrichtung zum Re-Meshing von 3D-Polygonmodellen**
Method and device for the re-meshing of 3D polygon models
Procédé et dispositif de remaillage de modèles de polygones en 3D

(43) Veröffentlichungstag der Anmeldung: 28.11.2012
(73) Patentinhaber: Deutsche Telekom AG, 53113 Bonn (DE)
(72) Erfinder: Graffunder, Andreas, 13125 Berlin (DE)
(74) Vertreter: Vossius & Partner Patentanwälte Rechtsanwälte mbB

(56) Entgegenhaltungen:
- US-A1- 2002 064 305
- US-A1- 2005 140 670
- DEBEVEC P ET AL: "Efficient view-dependent image-based rendering with projective texture-mapping", RENDERING TECHNIQUES '98. PROCEEDINGS OF THE EUROGRAPHICS WORKSHOP SPRINGER-VERLAG/WIEN WIEN, AUSTRIA,, 1 January 1998 (1998-01-01), pages 105-116,329, XP002644805, ISBN: 3-211-83213-0
- ISIDORO J ET AL: "Stochastic refinement of the visual hull to satisfy photometric and silhouette consistency constraints", 13 October 2003 (2003-10-13), PROCEEDINGS OF THE EIGHT IEEE INTERNATIONAL CONFERENCE ON COMPUTER VISION. (ICCV). NICE, FRANCE, OCT. 13 - 16, 2003; [INTERNATIONAL CONFERENCE ON COMPUTER VISION], LOS ALAMITOS, CA : IEEE COMP. SOC, US, PAGE(S) 1335 - 1342, XP010662547, ISBN: 978-0-7695-1950-0 * abstract * * sections 1 - 3.4 *
- VICTOR S. LEMPITSKY, DENIS V. IVANOV: "Seamless Mosaicing of Image-Based Texture Maps", IEEE CONFERENCE ON COMPUTER VISION AND PATTERN RECOGNITION, CVPR, 2007, XP031114335,

## Beschreibung

### Technisches Gebiet

Die Erfindung bezieht sich auf ein Verfahren und eine Vorrichtung zum Re-Meshing von 3D-Polygonmodellen bei Vertex-basierter Texturabbildung. Die Erfindung bezieht sich im besonderen auf ein Verfahren und eine Vorrichtung zum Re-Meshing von 3D-Polygonmodellen mit Vertex-basierter Texturabbildung, wobei sich die Menge der Vertices aus einer Teilmenge von Vertices, die erforderlich sind, um eine gewisse geometrische Auflösung sicherzustellen und einer Teilmenge von Vertices, die erforderlich sind, um eine gewisse Texturauflösung sicherzustellen, zusammensetzt.

### Stand der Technik

Es sind Verfahren bekannt zur Erstellung von 3D-Modellen: Laser Scanner, Multiview Verfahren wie z.B. Silhouettentechniken (Shape from Silhouettes), Photo Konsistenz etc. In vielen Anwendungen wie 3D-Video, Free-Viewpoint Video sind die zu modellierenden Objekte dynamisch, d.h. bei der Visualisierung müssen z.B. 25 Modelle pro Sekunde dargestellt werden. Für solche 3D-Videos werden oft folgende Randbedingungen gefordert:
R1: Inhalteanbieter sind sehr daran interessiert, dass die Produktion von Video-Content schnell vonstatten geht, damit pro Zeiteinheit möglichst viele Videos produziert werden können. Ein Maßstab ist dabei die dem Video inhärente Echtzeit, d.h. die Erstellung des Videos soll möglichst nicht mehr Zeit beanspruchen, als der zeitlichen Länge des Videos entspricht. Dies bedeutet, dass bei einem Video mit 25 Frames pro Sekunde 25 3D-Modelle pro Sekunde erstellt werden müssen, was eine erhebliche Herausforderung darstellt.
R2: Derartige 3D-Videos sollen nicht nur auf rechenstarken Multimedia PCs sondern auch auf Endgeräten mit schwächeren Ressourcen, bspw. Handys, Smartphones, Settop Boxen, abspielbar sein.

Die zu erstellenden 3D-Modelle müssen sowohl die Geometrie der Objektoberfläche als auch die Farben auf der Objektoberfläche, im Folgenden auch als Textur bezeichnet, geeignet repräsentieren. Üblicherweise werden zur Modellierung der 3D-Objektgeometrie Polygonnetze verwendet. Die Modellierung der Textur geschieht bei realen Objekten, bspw. realen Personen, gewöhnlich durch Abbildung von entsprechenden Farbbildern auf das Polygonnetz, wobei die Farbbilder von bildgebenden Sensoren, bspw. Videokameras, erzeugt werden.

Ein wesentliches Problem bei der Generierung solcher Modelle besteht darin, dass viele Verfahren sehr komplexe Polygonmodelle und Texturen mit vielen Polygonen und hochaufgelösten Farbbildern erzeugen, was im Widerspruch steht zu den beiden Anforderungen R1 und R2. Aus diesem Grund ist oft ein sogenanntes Re-Meshing notwendig, d.h. eine Neu-Generierung des Polygonmodells mit dem Ziel einer Komplexitätsreduktion.

In vielen Fällen ist eine hohe Auflösung der Geometrie nicht unbedingt erforderlich, wenn nur die Auflösung der Texturinformation hinreichend groß ist. In diesen Fällen wird man die Geometrieauflösung klein im Verhältnis zur Texturauflösung wählen. In anderen Fällen ist neben einer hohen Texturauflösung auch eine genaue Darstellung geometrischer Details notwendig, wie die Darstellung der Finger einer menschlichen Hand. Hier wären dann sowohl die Geometrieauflösung als auch die Texturauflösung hoch zu wählen. Um allen unterschiedlichen Szenarien gerecht zu werden, sollte daher von dem Re-MeshingVerfahren gefordert werden:
R3: Die geometrische Auflösung des reduzierten Polygonnetzes muss unabhängig von der Texturauflösung wählbar sein, damit stets ein für die jeweilige Anwendung optimaler Kompromiss gefunden werden kann.

Darüber hinaus ist es oft sinnvoll zu fordern:
R4: Der Detailreichtum hinsichtlich der Textur kann während des Betriebs starken Schwankungen unterworfen sein (z.B. starke Faltenbildung bei bewegten Textilien). Das Verfahren sollte diesem Umstand Rechnung tragen und alle Details entsprechend der gewählten Auflösung darstellen.

In wichtigen speziellen Anwendungsfällen existieren bestimmte Bereiche auf der Oberfläche von Objekten, die eine besondere Behandlung hinsichtlich der beiden Auflösungstypen erfordern, bspw. eine besonders genaue Darstellung des menschlichen Gesichts. Die folgende Anforderung berücksichtigt diesen Sachverhalt:
R5: Es sollte die Möglichkeit bestehen, bestimmte Regionen der Oberfläche hinsichtlich der Auflösungen von Geometrie und von Textur separat zu behandeln.

Wie schon oben dargestellt, sollen hier Anwendungen betrachtet werden, bei denen viele 3D Modelle nacheinander in einer Sequenz in Echtzeit oder Quasi-Echtzeit generiert werden müssen, wie bspw. 3D-Videos. Bei diesen Anwendungen sollte daher die folgende weitere Anforderung berücksichtigt werden

R6: Die Konfiguration von Parametern, die das Simplifizierungsverfahren steuern, sollte nur vor dem eigentlichen Betrieb, d.h. der Produktion der reduzierten Polygonnetze vorgenommen werden, d.h. eine ständige interaktive Nachjustierung während des Betriebs oder/und eine mehrmalige iterative Bearbeitung der gesamten Sequenz sind nicht erlaubt.

Generell unterscheidet man beim Mapping der Texturen auf ein Polygonnetz zwei Ansätze:
Polygon-basiertes Texture Mapping: Es werden sog. Texture Maps, z.B. Ausschnitte von Farbbildern auf bestimmte Teile des Polygonnetzes abgebildet. Üblicherweise wird jedem Polygon des Polygonnetzes ein bestimmter Ausschnitt einer Texture Map zugeordnet. Der Ausschnitt wird durch die sog. Texturkoordinaten definiert.

Vertex-basiertes Texture Mapping: Hier wird jedem 3D-Punkt (Vertex) des Polygonnetzes eine Farbe, meistens RGB-Werte zugeordnet. Beim Rendering werden die Farben der Vertices über der jeweiligen Polygonfläche, z.B. Dreieck interpoliert.

Mit den Polygon-basierten Texture Mapping Ansätzen sind allerdings insbesondere bei den hier betrachteten dynamischen 3D-Modellen, z.B. 3D-Videos von sich bewegenden Objekten eine Reihe von Nachteilen verbunden:
Bei dynamischen Modellen ändern sich die abzubildenden Texturen ständig, z.B. 25 Texturen pro Sekunde. Dies verursacht einen erheblichen Aufwand beim Rendering, da ständig neue Texturen in die Graphik-Pipeline geladen und auf die sich ebenfalls ändernden Polygonnetze abgebildet werden müssen. Besonders nachteilig wirkt sich dieses Problem bei Endgeräten mit geringen Ressourcen aus, bspw. Handys, Smartphones, Settop Boxen, da in diesen Fällen die Bildwiederholrate reduziert werden muss, so dass ruckelnde Darstellungen resultieren.

Polygon-basiertes Texture Mapping erzeugt oft an den Rändern der unterliegenden Dreiecke kantenartige Artefakte, die die visuelle Qualität einschränken. Dies wirkt sich besonders nachteilig bei dynamischen Objekten aus, bei denen sich das zugrundeliegende Polygonnetz ständig ändert und daher ein mit den Änderungen der Geometrie einhergehendes "Flirren" im Bereich der Polygonkanten entsteht.

Bei Abbildung der Texturen auf grosse Dreiecke ergeben sich Verzerrungen aufgrund der stückweise ebenen Approximation der Objektoberfläche.

Die Abbildung einer Textur auf ein Polygonnetz wird i.a. mittels Texturkoordinaten durchgeführt. Diese müssen bei der Übertragung des Modells über einen Datenkanal zusätzlich zur Geometrie und den Texturbildern übertragen werden und beanspruchen daher eine signifikante Datenrate.

Alle diese Nachteile weisen die Ansätze, die auf Vertex-basiertem Texture Mapping beruhen, nicht auf. Insbesondere lässt sich das Rendering, d.h. die Interpolation der Farbwerte der Vertices äußerst effizient realisieren, so dass auch mittlelgrosse Polygonnetze in Endgeräten mit schwächeren Prozessoren / Grafikpipelines mit hinreichend hoher Bildwiederholrate darstellbar sind, d.h. die Anforderung R2 ist mit diesen Techniken wesentlich besser erfüllbar.

Allerdings soll bei diesen Ansätzen sichergestellt sein, dass die Anzahl der Vertices im Hinblick auf die Anforderungen R1 und R2 nicht zu hoch ausfällt. Insbesondere um R2 zu gewährleisten, soll das Polygonmodell möglichst wenig Vertices aufweisen. Andererseits sollten genügend Vertices im Modell verbleiben, da sonst durch die Interpolation der Farben während des Rendering Prozesses die Farbverläufe unzulässig verfälscht werden. Wegen R4 kann es nötig sein, bei lokal wachsendem Detailreichtum in den Texturen, z.B. durch Faltenbildung bei Textilien, die Vertexdichte zu erhöhen, um bei konstanten Anforderungen an die Texturauflösung alle Details darstellen zu können.

In der Literatur sind unter anderen folgende Re-Meshing Verfahren bekannt, die für unterschiedlichste Zwecke eingesetzt werden.
[1] betrifft eine Übersicht neuerer Entwicklungen im Bereich der Re-Meshingverfahren von Oberflächen mit einem Hauptaugenmerk auf Graphikanwendungen. Die Verfahren werden in fünf Kategorien unterteilt: strukturiert, kompatibel, hochqualitativ, merkmalgesteuert und fehlergesteuert ("Error driven remeshing").
   Verfahren letzterer Kategorie, die oft auch unter dem Stichwort "Mesh Simplification" beschrieben wird, gehen von einem hochaufgelösten, initialen Mesh aus, das dann entsprechend der gegebenen Situation vereinfacht wird. Kennzeichen dieser Verfahren ist, dass die Anzahl der Vertices des initialen Mesh verringert wird, wobei für die optimale Auswahl der zu eliminierenden Vertices bzw. Polygonkanten bestimmte Gütekriterien zugrunde gelegt werden. Die große Mehrzahl der Verfahren betrachtet hierbei nur die möglichst optimale Reproduktion der Objektgeometrie als Gütekriterium. Lediglich einige wenige Verfahren berücksichtigen auch eine möglichst gute Reproduktion der Texturen. Üblicherweise werden bei diesen Verfahren Fehlermasse verwendet, die die Kosten eines Reduktionsschrittes repräsentieren. Ausgehend vom initialen Mesh wird dann stets diejenige Elimination durchgeführt, die die geringsten Kosten verursacht. Es entsteht eine Kette von reduzierten Netzen, die abgebrochen wird, wenn eine gewünschte, vorgegebene Anzahl von Vertices erreicht ist. Ein wesentliches Problem dieser Verfahren ist, dass eine lokale Erhöhung der Vertexdichte, wie oben beschrieben, nicht möglich ist. Des Weiteren können Geometrie- und Texturauflösungen bei diesen Verfahren nicht getrennt vorgegeben werden (R3). Die Anforderung R5 kann von diesen Verfahren ebenfalls nicht erfüllt werden, da spezielle ROIs nicht vorgesehen sind. Schliesslich kann auch die Anforderung R6 nicht erfüllt werden, da im Vorhinein nicht klar ist, wann das Verfahren abgebrochen werden soll, d.h. wie hoch die finale Anzahl von Vertices gewählt werden soll.
[2] betrifft ein Verfahren zur Erstellung von bildbasierten Texturkarten für ein virtuelles Modell eines realen Objektes. Mit vorgegebenem Oberflächenmesh und Kameraparametern kann eine Texturkarte erstellt werden durch Zusammensetzten von Mosaikbausteinen von Bildansichten der rückprojezierten Oberfläche. Das Mosaik hat allerdings sichtbare Säume. Die Minimierung der sichtbaren Säume wird als Minimierungsproblem einer meshbasierten Markov Random Field (MRF) Energie aufgefasst und die Performance klassischer Optimierungsalgorithmen für das vorgeschlagene MRF untersucht.
[3] betrifft ein Verfahren zur Meshgenerierung für zweidimensionale Bilder, welches auf einer Fehlerschranke der Mesh-Representation beruht. Ein klassischer Floyd-Steinberg Fehler-Diffusionsalgorithmus kommt zum Einsatz, um die Mesh-Nodes so zu platzieren, dass ihre räumliche Dichte entsprechend des örtlichen Bildinhaltes variiert. Im Ergebnis werden viele Mesh-Nodes in Regionen des Bildes platziert, die hochfrequente Anteile enthalten. Im Gegensatz dazu werden wenig Mesh-Nodes zur Darstellung von glatten Gebieten verwendet.
[4] betrifft ein Verfahren bei dem aus einer Folge von Bildern eines zu rekonstruierenden statischen Objekts, welches auf einem Drehteller vor einer statischen Kamera bewegt wird, ein 3D-Model generiert wird. Unter Ausnutzung der Kenntnis der Position und Orientierung des Drehtellers relativ zur Kamera wird durch Anwendung eines klassischen Space-Carving Ansatzes und eines Marching Cubes Algorithmus ein 3D-Polygonmodell des Objekts erstellt. Des Weiteren wird eine Komplexitätsreduktion anhand eines geometrischen Kriteriums durchgeführt bei dem Vertices des Polygonnetzes eliminiert werden, wenn ein bestimmter Fehler (Abstand des um den jeweiligen Vertex reduzierten Netzes vom ursprünglichen Netz) einen bestimmten Schwellwert nicht überschreitet. Um ein texturiertes Polygonnetz zu erhalten, wird für jedes Dreieck des Netzes dasjenige Bild bestimmt, indem seine Projektion die größte Fläche hat. Die drei Ecken der Projektion bilden Texturkoordinaten, die für die Texturabbildung verwendet werden.
[5] betrifft ein Verfahren, bei dem Texturabbildungen auf ein gegebenes Polygonnetz abhängig von der Ansicht des Nutzers auf die Szene (virtuelle Kamera) gebildet werden. Für jedes Polygon des Polygonnetzes werden maximal drei Kameras selektiert, die bei gegebenem Blickwinkel des Nutzers optimal für die Texturabbildung geeignet sind. Aus den Texturen dieser optimalen Kamerabilder wird dann während des Renderings ein gewichtetes Mittel berechnet, welches für die Texturabbildung herangezogen wird. Hierzu werden während des Rekonstruktionsprozesses für jedes Polygon jeweils eine sog. View Map generiert, mit der während des Renderings bei gegebener Nutzeransicht die entsprechenden optimalen Kameras (Bilder) und Gewichte bestimmt werden.

[1] Pierre Alliez, Marco Attene, Craig Gotsman, and Giuliana Ucelli. Recent Advances in Remeshing of Surfaces. In Leila de Floriani and Michela Spagnuolo, editors, Shape Analysis and Structuring, Mathematics and Visualization. Springer, Berlin, 2007.
[2] Victor S. Lempitsky, Denis V. Ivanov: "Seamless Mosaicing of Image-Based Texture Maps." IEEE Conference on Computer Vision and Pattern Recognition, CVPR 2007
[3] Y. Yang, M. N. Wernick, and J. G. Brankov, "A fast approach for accurate contentadaptive mesh generation," IEEE Trans. On Image Processing, vol. 12, no. 8, pp. 866-881, Aug. 2003
[4] US 2002/064305 A1 (TAYLOR RICHARD IAN [GB]) 30 May 2002 (2002-05-30)
[5] P. Debevec et al.: "Efficient view-dependent image-based rendering with projective texture-mapping", RENDERING TECHNIQUES '98. PROCEEDINGS OF THE EUROGRAPHICS WORKSHOP SPRINGER-VERLAG I WIEN WIEN, AUSTRIA" 1 January 1998 (1998-01-01), pp. 105-116,329

### Offenbarung der Erfindung

Es ist Aufgabe der Erfindung ein Verfahren und eine Vorrichtung zum Erstellen von 3D-Polygonmodellen bzw. 3D-Computermodellen für real existierende 3D-Objekte bereitzustellen, das zuverlässig ist und sicher arbeitet.

Diese Aufgabe wird durch ein Verfahren und eine Vorrichtung gemäß den unabhängigen Ansprüchen 1 und 14 gelöst. Die abhängigen Ansprüche 2 bis 13 betreffen besondere Ausführungsformen und beziehen sich auf weitere Aspekte der Erfindung.

Ein Aspekt der Erfindung betrifft ein Verfahren zum Re-Meshing von 3D-Polygonmodellen bei Vertex-basierter Texturabbildung, wobei eine Menge von 3D-Geo-Vertices als Teilmenge von 3D-Vertices aus einem bereitgestellten initialen Lead-Mesh eines 3D-Polygonmodells eines Objekts oder als eine Menge von neuen Vertices gebildet, eine Menge von 3D-Color-Vertices aus einer Anzahl M von Einzelansichten eines Objektes erzeugt, und ein Re-Meshing auf Basis der 3D-Geo-Vertices und 3D-Color-Vertices durchgeführt wird.

Hierbei wird vorzugsweise die Anzahl der 3D-Geo-Vertices in bestimmten Bereichen jeweils anhand von vorgegebenen Mindestanforderungen an die geometrische Auflösung bestimmt und/oder die Anzahl der 3D-Color-Vertices in bestimmten Bereichen jeweils anhand von vorgegebenen Mindestanforderungen an eine gewünschte Texturauflösung bestimmt. Für das erfindungsgemäße Verfahren wird das Per-Vertex-Coloring Prinzip bevorzugt.

Ein Aspekt der Erfindung betrifft das Bereitstellen der M Einzelansichten, die zweidimensionale Abbildungen des Objektes, vorzugsweise Kamerabilder von jeweils einer von M kalibrierten Kameras sind, sowie das Zuordnen einer zweidimensionalen Abbildung einer Kamera zu jedem Vertex an einer Oberfläche des Lead-Mesh, anhand eines Entscheidungskriteriums, welche Kamera eine optimale Texturinformation für den jeweiligen Vertex liefert. Vorzugsweise wird ein Verfahren auf Basis von Markov Random Fields eingesetzt, wobei jedem Vertex ein zugehöriges Label zugeordnet wird und die Vertices mit dem gleichen Label als View bezeichnet werden. Das Verfahren weist weiterhin die Schritte auf: Projizieren aller Vertices eines Views in die Bildebene der jeweiligen Kamera, sowie Erzeugen von Patches im Sinne von in sich dichten Regionen durch eine morphologische Close Operation für jeden View.

Ein Aspekt der Erfindung betrifft die Durchsuchung der Patches. Hierbei werden besonders interessante Regionen, im folgenden ROI genannt, erkannt, die mit Bezug auf die geometrische Auflösung und/oder die Texturauflösung besonders behandelt werden.

Ein weiterer Aspekt der Erfindung betrifft das Erzeugen von 2D- Color-Vertices durch optimales Approximieren der Farbfunktion in allen Patches durch jeweils eine stückweise lineare Funktion. Die optimalen 2D-Color-Vertices sind hierbei die Stützstellen der stückweise linearen Approximationsfunktion. Hierbei werden vorzugsweise jeweils geeignete Parameter zum Einstellen der gewünschten Texturauflösung und optional jeweils besondere Parameter zum Einstellen der jeweils gewünschten Texturauflösung in den ROI vorgegeben, wobei diese Parameter vorzugsweise einmalig initial vorgegeben werden.

Ein Aspekt der Erfindung betrifft die Berechnung von 3D-Color-Vertices. Zunächst wird eine Tiefenkarte für jeden View mit Hilfe des initialen Lead-Mesh, mittels einer Grafikanwendung, vorzugsweise mittels einer OpenGL API, berechnet. Ein Tiefenwert wird für jeden Bildpunkt des jeweiligen Views bezogen auf das 3D-Kamerakoordinatensystem des jeweiligen Views, vorzugsweise bezogen auf ein gemeinsames 3D-Kamerakoordinatensystem, zugeordnet. Die 3D-Color-Vertices werden durch Rückprojizieren der 2D-Color-Vertices aus dem jeweiligen View anhand der jeweiligen Bildkoordinaten und der zugeordneten Tiefe gemäß Gleichungen der perspektivischen Projektion erzeugt.

Ein weiterer Aspekt der Erfindung betrifft das Bereitstellen und/oder Erzeugen von modifizierten, vorzugsweise lokal modifizierten Tiefenkarten, die vorzugsweise beim Erzeugen von künstlichen Geometrien verwendbar sind.

Ein Aspekt der Erfindung betrifft die Bestimmung von 3D-Vertices des initialen Lead-Mesh, die zu ROI gehören. Hierbei wird ein bestimmter 3D-Vertex in die gemäß dem entsprechenden Patch zugeordnete Kameraebene projiziert und jeder 3D-Vertex entsprechend dem ROI in dem der projizierte Punkt liegt markiert; wobei vorzugsweise markierte 3D-Vertices des Lead-Mesh in ihrer Position verändert werden und/oder neue 3D-Vertices hinzugefügt oder entfernt werden, die vorzugsweise beim Erzeugen von künstlichen Geometrien verwendbar sind.

Ein weiterer Aspekt der Erfindung betrifft das Bilden von Geo-Vertices durch eine Reduzierung des Lead-Mesh. Die Geo-Vertices werden als Teilmenge von 3D-Vertices des Lead-Mesh bestimmt, vorzugsweise berechnet. Das Lead-Mesh lässt sich durch Entfernen von Vertices und/oder Verschieben von Vertices anhand eines geometrischen Kriteriums, welches optimiert wird, reduzieren.

Ein Aspekt der Erfindung betrifft die Erzeugung eines Polygonmesh von R-Vertices. Ein Polygonmesh von R-Vertices aus einer zusammengefassten Menge der 3D-Geo-Vertices und 3D-Color-Vertices wird durch Triangulierung (d.h. Definition von Dreiecken für die R-Vertices) erzeugt. Dies geschieht durch Anwendung von speziellen Nearest Neighbor Operationen zwischen den Lead-Mesh Vertices und den R-Vertices, wobei durch eine spezielle Anwendung von Subdivison Operationen gewährleistet wird, dass die Vertexdichte des resultierenden Polygonnetzes bei lokal hohem Detailreichtum über die Vertexdichte des initialen Leadmesh hinausgehen kann.

Ein Aspekt der Erfindung betrifft das Zuordnen von Farben zu den 3D-Geo-Vertices. 3D-Geo-Vertices in der Menge der R-Vertices, die sich durch Projektion in die dem jeweiligen View zugeordnete Bildebene ergeben, werden Farben zugeordnet. Die Farben zu den 3D-Geo-Vertices in der Menge der R-Vertices können durch Mittelwertbildung der Farben aus zweidimensionalen Abbildungen, vorzugsweise Kamerabildern, besonders bevorzugt Views, die diesen Vertex in der Projektion enthalten, zugeordnet werden.

Ein weiterer Aspekt der Erfindung betrifft die Erkennung von Regions of Interest, ROIs. Hierbei werden Erkennungsverfahren in den zweidimensionalen Abbildungen, bevorzugt Kamerabildern, zum Detektieren von ROIs und zur individuellen Realisierung der Geometrieauflösung und Texturauflösung in diesen Regionen angewendet.

Ein Aspekt der Erfindung betrifft das Realisieren von Spezialeffekten in den erkannten Regions of Interest. ROIs, vorzugsweise künstliche Geometrien und Texturverläufe eines Objekts, wie ein in Form und/oder Größe verändertes Körperteil beispielsweise eine Nase einer Person oder Änderung der Augenfarbe einer Person werden durch das Einsetzten entsprechender künstlicher 3D-Color-Vertices und Verwendung lokal modifizierter Tiefenkarten gesondert behandelt.

Erfindungsgemäß können die beschriebenen Aspekte in einer Vorrichtung zum Durchführen eines Verfahrens realisiert werden. Beispielsweise kann ein Computer mit einem Grafikprogramm eingesetzt werden.

### Kurzbeschreibung der Figuren

Das Verfahren und eine zugeordnete Vorrichtung der Erfindung werden detaillierter im Folgenden anhand von Ausführungsbeispielen und den Zeichnungen beschrieben.

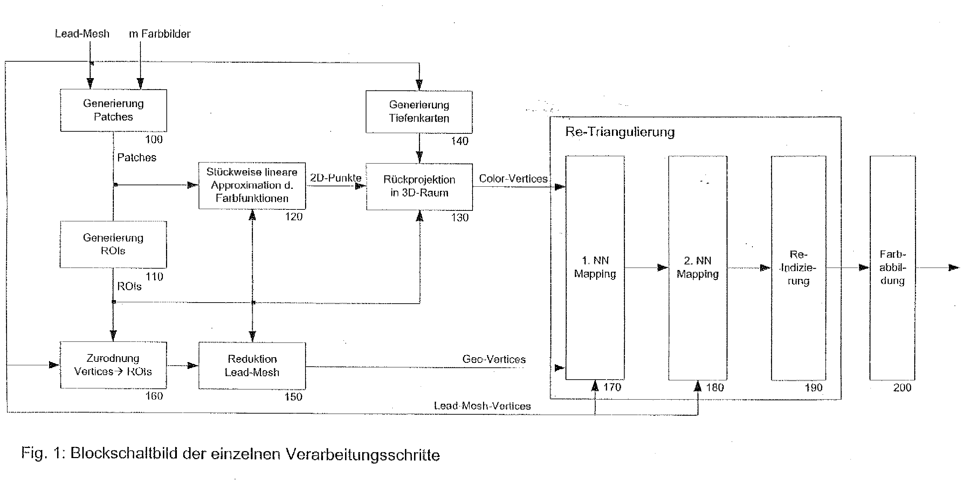

Es zeigt Figur 1 ein Blockschaltbild der einzelnen Verarbeitungsschritte des Verfahrens.

### Detaillierte Beschreibung der Ausführungsformen

### Variante A.

In einer Ausführungsform hat in einem initialen Schritt eine 3D-Rekonstruktion der Geometrie des zu modellierenden Objektes bereits stattgefunden, vorzugsweise unter Verwendung eines Mulitview Verfahrens wie das Shape from Sillhouettes Verfahren. Darüber hinaus liegen Einzelansichten, vorzugsweise Messungen der Texturen der Oberfläche des Objekts in der Form von Kamerabildern bereits vor, d.h. es liegt ein Polygonnetz, welches Vertices, Dreiecksdefinitionen und Oberflächennormalen für jeden Vertex umfasst, in Form eines Lead-Mesh vor. Des Weiteren liegen M Ansichten des Objekts von M kalibrierten Kameras, die feststehend im Raum um das Objekt herum gruppiert sind, vor.

### Variante B)

Alternativ dazu kann das Lead-Mesh außer den Vertices, Dreiecksdefinitionen, Oberflächennormalen infolge eines zusätzlichen, bereits erfolgten Verarbeitungsschrittes eine Farbe für jeden Vertex enthalten oder durch eine oder mehrere Texturemaps texturiert sein. In diesem Fall wird das texturierte Lead-Mesh in die Bildebenen der M Kameras gerendert. Die somit entstehenden M Farbbilder treten dann an die Stelle der M Kamerabilder von Variante A. Im Folgenden werden diese Bilder dann einfach wieder als Einzelansichten "Kamerabilder" bzw. "Farbbilder" bezeichnet.

### Variante C)

In diesem Fall liegt das Lead Mesh -wie bei Variante B- als vollständig texturiertes Polygonmodell vor, ohne dass jedoch Kameras an der Verarbeitung direkt beteiligt waren (bspw. wenn die Modelle mit Hilfe eines Autorentools erstellt wurden). In diesem Fall werden geeignete virtuelle Kameras definiert und das Lead-Mesh in die einzelnen Ebenen dieser virtuellen Kameras gerendert. Die somit entstehenden M Farbbilder treten dann an die Stelle der M Kamerabilder von Variante A. Im Folgenden werden diese Bilder dann auch in diesem Fall einfach als Einzelansichten "Kamerabilder" bzw. "Farbbilder" bezeichnet.

In einer bevorzugten Ausführungsform weist das Verfahren die Verarbeitungsschritte wie in Figur 1 gezeigt auf. Das Lead-Mesh, bzw. die Lead-Mesh-Vertices sind Eingangsgröße für die Blöcke Generierung von Patches 100, Zuordnung Vertices -> ROIs 160 sowie Generierung von Tiefenkarten 140. Die M Ansichten des Objektes in Form von M Farbbildern ist eine weitere Eingangsgröße des Blocks Generierung von Patches 100, der Patches als Ausgangsgröße liefert. Die Patches sind Eingangsgröße des Blocks Generierung von ROIs 110 sowie einem Block Stückweise lineare Approximation der Farbfunktionen 120. ROIs, die Ausgangsgröße des Blocks Generierung von ROIs sind, sind Eingangsgröße der Blöcke Zuordnung von Vertices-ROIs 160, Stückweise Approximation der Farbfunktionen 120, Reduktion des Lead-Mesh 150 sowie Rückprojektion in den 3D-Raum 130. Der Block Zuordnung Vertices-ROIs 160 ist ausgangsseitig mit dem Block Reduktion Lead-Mesh 150, der als Ausgangsgröße Geo-Vertices liefert, verbunden. Der Block Generierung Tiefenkarten 140 ist ausgangsseitig mit dem Block Rückprojektion in den 3D-Raum 130 verbunden. Der Block Stückweise Lineare Approximation 120 liefert als Ausgangsgröße 2D-Puntke an den Block Rückprojektion in den 3D-Raum 130. Der Block Rückprojektion in den 3D-Raum liefert als Ausgangsgröße Color-Vertices. Lead-Mesh-Vertices, Color-Vertices und Geo-Vertices sind Eingangsgröße des Blocks 1.NN Mapping 170. Der Block 1.NN-Mapping ist ausgangsseitig mit dem Block 2.NN Mapping 180 verbunden. Eingangsgröße des Blocks 2.NN-Mapping sind zudem die Lead-Mesh-Vertices. Der Block 2.NN Mapping ist ausgangsseitig mit dem Block Re-Indizierung 190 verbunden. Der Block Re-Indizierung ist ausgangsseitig mit dem Block Farbabbildung 200 verbunden. Die Blöcke 1.NN Mapping 170, 2.NN Mapping 180 und Re-Indizierung 190 bilden gemeinsam einen Block Re-Triangulierung.

In bevorzugten Ausführungsformen weist das Verfahren die folgenden Schritte auf:

### 1. Schritt: Zuordnung von optimalen Views und Generierung von Patches

Da die Texturen für das zu erstellende neue Mesh aus den Kamerabildern gewonnen werden sollen, wird für jeden Vertex (Oberflächenpunkt) festgelegt, welche Kamera die beste Texturinformation liefert. Hierbei ist darauf zu achten, dass diese Auswahl von Punkt zu Punkt nicht unnötig stark variiert. Andererseits soll die Qualität der Texturinformation möglichst gross sein, d.h. der Winkel zwischen der Oberflächennormalen und dem Sehstrahl der betreffenden Kamera darf nicht zu groß werden. Zur Bestimmung eines Kompromisses zwischen diesen beiden sich widersprechenden Forderungen wird eines der üblichen Verfahren z.B. auf Basis von Markov Random Fields, z.B. [2], eingesetzt, das auf die Vertices des Lead-Mesh angewendet wird. Das Ergebnis dieses Schrittes ist eine Menge von Labels, die jedem Vertex des Lead-Mesh eine optimale Kamera zuordnet. Diese Labels werden im folgenden als "Views" bezeichnet.

In einem weiteren Schritt werden zunächst alle Vertices eines Views in die Bildebene der jeweiligen Kamera projiziert. Durch eine morphologische Close Operation erhält man eine Menge von in sich dichten Regionen in der jeweiligen Bildebene, die im folgenden als "Patches" bezeichnet werden (Block 100).

### 2. Schritt: Detektion von ROls

In diesem Schritt wird in den Patches nach besonders interessanten Regionen (ROI: Region of Interest) gesucht (Block 110). Dies sind Regionen, die hinsichtlich der Geometrie und/oder Texturauflösung speziell behandelt werden sollen. Hierzu werden gewisse Bildmerkmale detektiert, die anwendungsspezifisch sind. Soll z.B. das Gesicht eines Menschen mit möglichst hoher Auflösung dargestellt werden, so werden durch Anwendung bekannter Gesichtserkennungsmethoden zunächst die Augen, Mund und Nase erkannt. Die Gebiete in denen sich diese Merkmale befinden (ROIs) werden grob lokalisiert und besonders gekennzeichnet.

### 3. Schritt: Berechnung von Texturabtastpunkten (2D-Color-Vertices)

Durch eine Approximation der Kamerabilder wird eine minimale Anzahl von neuen Vertices gewonnen. Zu diesem Zweck wird die Farbfunktion in allen Patches durch jeweils eine stückweise lineare Funktion optimal approximiert (Block 120) wobei die gewünschte Texturauflösung (Genauigkeit) durch Vorgabe geeigneter Parameter eingestellt werden kann, einmalig, d.h. initial vor dem eigentlichen Betrieb. Vorzugsweise wird diese 2D-Approximation mit einem Verfahren durchgeführt, das aus [3] bekannt ist. Die in diesem Approximationsprozess gefundenen 2D-Punkte kennzeichnen diejenigen Stellen in den einzelnen Kamerabildern, die zur Erreichung der gewünschten Texturauflösung abgetastet werden sollen (2D-Color-Vertices). Auf diese Weise wird gewährleistet, dass bei temporärer Erhöhung des Detailreichtums, z.B. Faltenbildung bei bewegten Objekten, genügend Abtastpunkte generiert werden, um die gewünschte, eingestellte Auflösung zu erreichen. Hierbei werden die im Schritt 2 bestimmten ROIs hinsichtlich der Texturauflösung speziell behandelt, d.h. die o.a. Parameter werden in diesen Regionen separat konfiguriert, ebenfalls einmalig, d.h. initial vor dem eigentlichen Betrieb. Darüber hinaus können auch zusätzliche Abtastpunkte in den ROIs generiert werden, um im Zusammenspiel mit dem 4. Schritt künstliche Geometrien zu erzeugen, z.B. eine kürzere/längere Nase. Des Weiteren können die Farben spezieller Abtastpunkte in den ROIs künstlich verändert werden um Spezialeffekte zu erzeugen, z.B. blaue statt grüne Augen.

### 4. Schritt: Berechnung von 3D-Color-Vertices durch Rückprojektion

Die im 3. Schritt gefundenen 2D-Abtastpunkte werden nun als Projektionen entsprechender 3D-Punkte aufgefasst, die für das neu zu berechnende 3D-Polygonnetz verwendet werden. Um die Rückprojektion in den 3D-Raum zu bewerkstelligen (Block 130), wird für jeden View mit Hilfe des Lead-Mesh eine Tiefenkarte berechnet (Block 140). Hierbei wird jedem Bildpunkt ein Tiefenwert bezogen auf das 3D-Kamerakoordinatensystem des jeweiligen Views zugeordnet. Die Berechnung der Tiefenkarten lässt sich bei gegebenem Polygonnetz (Lead-Mesh) sehr effizient auf einer üblichen Grafik-Hardware z.B. mittels der OpenGL API durchführen. Die Rückprojektion der 2D-Abtastpunkte aus dem jeweiligen View wird dann anhand der jeweiligen Bildkoordinaten und der zugeordneten Tiefe gemäß der Gleichungen der perspektivischen Projektion durchgeführt. Hierbei wird bevorzugt, dass das verwendete Multi-Kamerasystem kalibriert ist, d.h. die Projektionsparameter der einzelnen Kameras sind bekannt und beziehen sich vorzugsweise alle auf das gleiche globale Koordinatensystem. Das Ergebnis dieses Schrittes ist eine Menge von neuen 3D Vertices (3D-Color-Vertices). Anstatt der aus dem initialen Lead-Mesh abgeleiteten Tiefenkarten können auch vorzugsweise lokal modifizierte Tiefenkarten bzw. ein lokal modifiziertes Lead Mesh benutzt werden, um künstliche Geometrien zu erzeugen, z.B. eine kürzere/längere Nase.

### 5. Schritt: Berechnung von Geo-Vertices durch Reduktion des Lead-Mesh

In diesem Schritt (Block 150) wird eine Reduktion des Lead-Mesh anhand geometrischer Kriterien durchgeführt. Zunächst werden diejenigen 3D-Vertices des Lead-Mesh bestimmt, die zu ROIs gehören. Zu jedem Vertex gehört gemäss Schritt 1 ein Patch, der wiederum genau mit einer Kamera assoziiert ist. Jeder Vertex des Lead-Mesh wird in die zugeordnete Kameraebene projiziert. Je nachdem, in welcher ROI der projizierte Punkt liegt, wird der zugehörige 3D-Vertex entsprechend markiert (Block 160).

Zur Erzielung von Spezialeffekten können markierte Vertices des Lead-Mesh in ihrer Position verändert werden oder es können neue Vertices entfernt oder hinzugefügt werden (mit entsprechenden Dreiecksdefinitionen), um künstliche Geometrien zu erzeugen, z.B. eine kürzere/längere Nase, Entfernung/Addition eines Körperteils.

Im nächsten Schritt wird die eigentliche Reduktion durchgeführt. Hierzu wird ein übliches Mesh Simplification Verfahren verwendet, welches nur geometrische Kriterien wie z.B. die lokale Krümmung berücksichtigt. Die Anzahl der Vertices wird dabei den Erfordernissen aus rein geometrischer Sicht angepasst. Hierbei sind zwei Möglichkeiten zu unterscheiden:
a) Es wird ein Verfahren verwendet, bei dem zur Reduktion lediglich Vertices entfernt werden. b) Es wird ein Verfahren verwendet, bei dem zur Reduktion Vertices entfernt werden und die verbleibenden Vertices optimal verschoben werden im Sinne des geometrischen Kriteriums. In diesem Fall wird bei der Verschiebung der Vertices entschieden, ob ein Color-Vertex bereits hinreichend nah an der optimalen Stelle gelegen ist. Zur Vermeidung unnötiger Redundanzen kann in diesem Fall der entsprechende Vertex wegfallen.

Das Ergebnis ist im Fall a) eine Teilmenge der ursprünglichen Vertices (d.h. der Vertices des Lead-Mesh) und im Fall b)eine Menge von neuen Vertices. In beiden Fällen sollen die resultierenden Vertices im Folgenden als "Geo-Vertices" bezeichnet werden. Die Parameter des verwendeten Reduktionsverfahrens werden entsprechend der gewünschten Geometrieauflösung geeignet festgelegt, vorzugsweise initial, d.h. vor dem eigentlichen Betrieb. Hierbei werden die entsprechend der ROIs markierten Vertices separat mit im Allgemeinen verschiedenen Parametern behandelt.

### 6. Schritt: Triangulierung

Die im 4. Schritt bestimmten 3D-Color-Vertices und die im 5. Schritt berechneten Geo-Vertices bilden nun die Vertices des neu zu berechnenden Polygonnetzes (Re-Mesh), die im folgenden als "R-Vertices" bezeichnet werden. Die Aufgabe besteht nun darin, für diese R-Vertices ein neues Dreiecksnetz zu generieren. D.h. es müssen Dreiecksdefinitionen (Konnektivität) bestimmt werden. Dies geschieht in drei Schritten:
1. Nearest Neighbor Mapping (Block 170): Zunächst wird jedem R-Vertex sein nächster Nachbar (NN-Vertex) im Lead-Mesh zugeordnet. Die NN-Definition beruht auf einem geeigneten Distanzmaß, z.B. der euklidischen Distanz. Nach Berechnung des NN-Mappings wird getestet, ob allen m R-Vertices genau m verschiedene Vertices des Lead - Mesh zugeordnet werden. Sollte es vorkommen, dass mehrere R-Vertices auf denselben NN-Vertex gemappt werden, so wird lokal in einer Nachbarschaft um diesen NN-Vertex herum eine Erhöhung der Auflösung durchgeführt. Dies geschieht durch eine einfache, interpolierende Subdivision, d.h. jedes Dreieck des Lead-Mesh welches mit diesem NN-Vertex verbunden ist, wird in mehrere kleinere Dreiecke unterteilt. Danach wird in dieser Nachbarschaft und für die beteiligten R-Vertices ein erneutes NN-Mapping durchgeführt. Diese Prozedur wird solange durchgeführt, bis die Bedingung der Eindeutigkeit erfüllt ist. Durch diese Maßnahme wird der Tatsache Rechnung getragen, dass die erforderliche Vertexdichte bei einer lokalen Erhöhung des Detailreichtums (z.B. Faltenbildung bei bewegten Objekten) über diejenige des initialen Polygonnetzes (Lead-Mesh) hinausgehen kann. Jeder R-Vertex wird nun anstelle seines NN-Vertex in das Lead-Mesh eingesetzt. Auf diese Weise erbt der R-Vertex die Konnektivität im Lead-Mesh von seinem NN-Vertex.
2. Nearest Neighbor Mapping (Block 180): In einem zweiten Schritt werden für alle Vertices des Lead-Mesh die NN aus der Menge der R-Vertices bestimmt. Danach werden alle Vertices des Lead-Mesh mit ihren zuvor berechneten NN vereint, d.h. die 3D-Koordinaten (x,y,z) eines Lead-Mesh Vertex werden ersetzt durch die Koordinaten seines jeweiligen NN aus der Menge der R-Vertices. Hierdurch werden bei vielen Dreiecken Eckpunkte zu einem Vertex verschmolzen, wodurch diese Dreiecke singulär (Fläche Null) werden.
3. Re-Indizierung (Block 190): Im dritten Schritt werden die überflüssigen singulären Dreiecke durch eine Re-Indizierung entfernt. Die Konnektivität des Lead-Mesh bleibt hierbei für die R-Vertices erhalten, so dass sich ein vollständiges neues 3D-Polygonnetz ergibt.

Die beiden NN-Operationen können sehr effizient mit einem KD-Tree Verfahren durchgeführt werden. Diese Methode der Re-Triangulierung ist daher sehr schnell und erfüllt die Anforderung R1.

### 7. Schritt: Abbildung der Farben

Als letzten Schritt verbleibt die Zuordnung der Farben zu den R-Vertices im neu definierten Polygonnetz (Block 200). Für die Color-Vertices sind die Farben bereits durch die Abtastpunkte in den jeweiligen Bildebenen (Schritt 3) bekannt. Für die Geo-Vertices werden die in Schritt 2 bestimmten optimalen Views des Lead-Mesh verwendet. Eine Projektion in die dem jeweiligen View zugeordnete Bildebene ergibt somit den zugeordneten Farbwert. Alternativ können aber auch gewichtete Mittel von Farben aus allen Kamerabildern, die den jeweiligen Vertex "sehen" benutzt werden. Hierbei wird der jeweilige Vertex in diejenigen Kameraebenen projiziert, für die die Sichtbarkeitsbedingung erfüllt ist. Der jeweilige Farbwert wird abgetastet, ggf. mittels Subpixel-Interpolation und dann wird mit dieser Menge von Abtastwerten ein gewichtetes Mittel berechnet. Der so berechnete Farbwert wird dem jeweiligen Vertex zugeordnet.

Auf diese Weise werden Geo-Vertices und 3D-Color-Vertices in idealer Weise kombiniert. Die Geo-Vertices stellen entsprechend der gewünschten Geometrieauflösung die minimale Anzahl von Vertices dar. Hinzu kommt eine minimale Anzahl von 3D-Color-Vertices, die zur Darstellung der Texturdetails entsprechend der vorgegebenen Texturauflösung notwendig sind. Sollten sich 3D-Color-Vertices in unmittelbarer Nähe zu Geo-Vertices befinden, werden sie durch die erste NN-Operation (s. 6. Schritt) mit diesen verschmolzen, so dass Redundanzen vermieden werden. Bestehen jedoch zwischen Geo-Vertices und 3D-Color-Vertices hinreichend grosse Entfernungen, so müssen diese Punkte in der finalen Menge erhalten bleiben, da hier beide Auflösungen -Geometrie- und Texturauflösungvorgegeben wurden. Damit enthält das finale 3D-Modell die minimale Anzahl von Vertices.

Die Erfindung weist eine Reihe von Vorteilen auf:
Insbesondere ist das Verfahren echtzeitfähig bei vertretbarer numerischer Komplexität.Die mit dem Verfahren gewonnen 3D-Modelle sind bei dynamischen Objekten auch auf Endgeräten mit schwächeren Ressourcen abspielbar. Die zu erstellenden 3D Objekte können sowohl die Geometrie der Objektoberfläche als auch die Farben der Objektoberfläche geeignet repräsentieren, wobei die geometrische Auflösung des reduzierten Polygonnetzes unabhängig von der Texturauflösung wählbar ist sowie zudem bei hoher Dynamik der Texturen alle Details der gewählten Darstellung auflösen kann. Zudem können bestimmte Regionen der Objektoberfläche separat behandelt werden. Die Konfiguration von Parametern, die das Simplifizierungsverfahren steuern, können vor dem eigentlichen Betrieb vorgenommen werden, d.h. eine ständige interaktive Nachjustierung während des Betriebs und/oder eine mehrmalige iterative Bearbeitung der gesamten Sequenz muss nicht zwangsläufig erfolgen.

Die Erfindung weist als Vertexbasiertes Texturmappingverfahren insbesondere im Vergleich zum Polygonbasierten Texturmapping die folgenden Vorteile auf:
Der Renderingaufwand durch Vermeidung des Polygon-basierten Texture-Mapping ist geringer. Bei einer späteren Übertragung der erstellten Objektmodelle über einen Datenkanal ist eine Übertragung/Encodierung/Decodierung von Texturkoordinaten nicht erforderlich, was den Rechenaufwand reduziert und Bandbreite spart. Im Verhältnis zu Polygon-basiertem Texture -Mapping sind erheblich weniger Farbwerte in einem 3D-Modell vorhanden, so dass der Codieraufwand erheblich vermindert wird, was sich positiv auf den Rechenaufwand beim Rendering auswirkt und die Übertragungsbandbreite vermindert. Verfälschungen durch Verzerrungen beim Mapping der Texturen auf grosse Dreiecke und Artefakte an den Polygonkanten treten nicht auf.

Das beanspruchte Verfahren sorgt dafür, dass der wesentliche Nachteil des Vertexbasierten Texture -Mapping minimiert wird, nämlich die -verglichen mit Verfahren, die Polygon-basiertes Texture-Mapping verwenden- höhere Anzahl von Vertices im Polygonnetz. Das beanspruchte Verfahren stellt eine minimale Anzahl von Vertices bei hoher Qualität der generierten Modelle sicher. Dies wird erreicht, durch die folgenden zentralen Ideen:
Die Reduktion der Netzkomplexität wird nicht nur durch eine Elimination von Vertices erreicht, sondern durch eine Elimination von Vertices verbunden mit einer bildgeführten Generierung von speziellen neuen Vertices. Die Elimination wird hierbei mit Hilfe von Kriterien durchgeführt, die lediglich die optimale Modellierung der Geometrie bezüglich der gewünschten Geometrieauflösung sicherstellen. Unabhängig davon wird eine minimale Anzahl neuer Vertices generiert, die die gewünschte Texturauflösung sicherstellen.

Die Generierung dieser neuen Vertices wird nicht im 3D-Bereich durchgeführt sondern im 2D-Bereich. Eine stückweise lineare Approximation der Farbfunktion in den Kamerabildern führt zu einer Generierung von gewissen 2D-Abtastpunkten für die Objekttexturen. Mit dieser Approximation wird sichergestellt, dass die gewünschte Texturauflösung mit einer minimalen Anzahl von Abtastpunkten erreicht wird, d.h. das Netz wird an den sich verändernden Detailreichtum dynamisch angepasst. Dies geschieht ohne eine Nachjustierung von Parametern während des Betriebs.

Durch Anwendung spezieller Bildanalysealgorithmen in den Kamerabildern werden ROIs erkannt, sodass in diesen Gebieten speziell angepasste Geometrie- und Texturauflösungen realisiert werden können. Darüber hinaus ist es möglich, dass Spezialeffekte realisiert werden, d.h. dass künstliche Geometrien und Texturverläufe generiert werden können, z.B. eine veränderte Nase, Änderung der Augenfarbe.

Die neu generierten 2D-Punkte werden mit Hilfe von Tiefenkarten auf die Objektoberfläche projiziert und bilden zusammen mit den Punkten des reduzierten Initialnetzes Kandidaten für die 3D-Punkte des neuen Polygonnetzes. Um für diese Punktmenge ein neues Polygonnetz mit minimaler Anzahl von Vertices zu generieren, werden spezielle Nearest Neighbor Operationen zwischen dem initialen Netz und den neuen Vertices verwendet, die numerisch effizient, d.h. schnell berechnet werden können. Falls die Vertexdichte des initialen Netzes nicht ausreicht, um alle Details mit der geforderten Auflösung darzustellen, wird die Vertexdichte hierzu lokal erhöht.

Die Erfindung wurde anhand von Beispielen und der Figuren näher erläutert, wobei diese Darstellung die Erfindung nicht einschränken soll. Es versteht sich, dass Fachleute Änderungen und Abwandlungen machen können, ohne den Umfang der folgenden Ansprüche zu verlassen.

## Patentansprüche

1. Computerimplementiertes Verfahren zum Re-Meshing von 3D-Polygonmodellen bei Vertex-basierter Texturabbildung zur Visualisierung von dynamischen als 3D-Polygonmodelle modellierten Objekten in 3D-Videos, das folgende Schritte aufweist:
a) Bilden einer Menge von 3D-Geometrie-Vertices aus 3D-Vertices aus einem bereitgestellten initialen Lead-Mesh eines 3D-Polygonmodells eines Objekts;
b) Erzeugen einer Menge von 3D-Color-Vertices aus einer Anzahl M von Einzelansichten des Objekts, wobei die M Einzelansichten des Objekts zweidimensionale Ansichten des Objekts sind; und
c) Durchführen eines Re-Meshing zur Erzeugung eines neuen Polygonnetzes auf Basis der 3D-Geometrie-Vertices und 3D-Color-Vertices,
wobei das Verfahren ferner aufweist:
a) Bestimmen von 2D-Color-Vertices aus 2D-Punkten der M Einzelansichten, die anhand einer Farbfunktion gewonnen werden;
b) Bestimmen der 3D-Color-Vertices durch Projizieren der 2D-Color-Vertices mit Hilfe von aus dem initialen Lead-Mesh berechneten Tiefenkarten in den dreidimensionalen Raum;
c) Berechnen von den 3D-Geometrie-Vertices durch Reduzieren des Lead-Mesh durch Entfernen von 3D-Vertices oder durch Entfernen von den 3D-Vertices und das Verschieben von verbliebenen 3D-Vertices anhand eines geometrischen Kriteriums, welches optimiert wird; und
d) Zuordnen von Farbwerten zu den 3D-Geometrie-Vertices aus den Einzelansichten.

2. Verfahren nach Anspruch 1, wobei:
die Anzahl der 3D-Geometrie-Vertices in bestimmten Bereichen jeweils anhand von vorgegebenen Mindestanforderungen an die geometrische Auflösung bestimmt wird, und/oder
die Anzahl der 3D-Color-Vertices in bestimmten Bereichen jeweils anhand von vorgegebenen Mindestanforderungen an eine gewünschte Texturauflösung bestimmt wird.

3. Verfahren nach Anspruch 1 oder 2,
wobei die 2D-Color-Vertices aus der 2D-Punkten der M Einzelansichten durch stückweise lineare Approximation der Farbfunktion von zweidimensionalen Abbildungen des Objektes gewonnen werden.

4. Verfahren nach einem der Ansprüche 1 bis 3, das aufweist:
(a) Bereitstellen der M Einzelansichten, die vorzugsweise Kamerabilder von jeweils einer von M kalibrierten Kameras sind;
(b) Zuordnen einer zweidimensionalen Abbildung einer Kamera aus einer Menge von M Kameras zu jedem Vertex des Lead-Mesh, anhand eines Entscheidungskriteriums, welche Kamera eine optimale Texturinformation für den jeweiligen Vertex liefert, wobei jedem Vertex ein zugehöriges Label zugeordnet wird und die Vertices mit dem gleichen Label als View bezeichnet werden, vorzugsweise mit einem Verfahren auf Basis von Markov Random Fields;
(c) Projizieren aller Vertices eines Views in die Bildebene der jeweiligen Kamera;
(d) Erzeugen von Patches im Sinne von in sich dichten Regionen durch eine morphologische Close Operation für jeden View.

5. Verfahren nach Anspruch 4, das aufweist:
Durchsuchen der Patches und Erkennen von besonders interessanten Regionen, im folgenden ROI genannt, die mit Bezug auf die geometrische Auflösung und/oder die Texturauflösung besonders behandelt werden.

6. Verfahren nach Anspruch 5, das aufweist:
Erzeugen der 2D- Color-Vertices durch optimales Approximieren der Farbfunktion in allen Patches durch jeweils eine stückweise lineare Funktion, wobei vorzugsweise jeweils geeignete Parameter vorgegeben werden zum Einstellen der gewünschten Texturauflösung und optional jeweils besondere Parameter vorgegeben werden zum Einstellen der jeweils gewünschten Texturauflösung in den ROI, wobei diese Parameter vorzugsweise einmalig initial vorgegeben werden.

7. Verfahren nach einem der Ansprüche 4 bis 6, das aufweist:
(a) Berechnen einer Tiefenkarte für jeden View mit Hilfe des initialen Lead-Mesh, mittels einer Grafikanwendung, vorzugsweise mittels einer OpenGL API;
(b) Zuordnen eines Tiefenwertes für jeden Bildpunkt des jeweiligen Views bezogen auf das 3D-Kamerakoordinatensystem des jeweiligen Views, vorzugsweise bezogen auf ein gemeinsames 3D-Kamerakoordinatensystem;
(c) Erzeugen der dreidimensionalen Color-Vertices durch Rückprojizieren der 2D-Abtastpunkte aus dem jeweiligen View anhand der jeweiligen Bildkoordinaten und der zugeordneten Tiefe gemäß Gleichungen der perspektivischen Projektion.

8. Verfahren nach Anspruch 7, das aufweist:
Bereitstellen und/oder Erzeugen von modifizierten, vorzugsweise lokal modifizierten Tiefenkarten, die vorzugsweise beim Erzeugen von künstlichen Geometrien verwendbar sind.

9. Verfahren nach einem der Ansprüche 5 bis 8, das aufweist:
(a) Bestimmen von 3D-Vertices des initialen Lead-Mesh, die zu ROI gehören;
(b) Projizieren jedes im Schritt (a) bestimmten 3D-Vertex in die gemäß dem entsprechenden Patch zugeordnete Kameraebene; und
(c) Markieren jedes 3D-Vertex entsprechend dem ROI in dem der projizierte Punkt liegt; wobei vorzugsweise
(d) markierte 3D-Vertices des Lead-Mesh in ihrer Position verändert werden und/oder neue 3D-Vertices hinzugefügt oder entfernt werden, die vorzugsweise beim Erzeugen von künstlichen Geometrien verwendbar sind.

10. Verfahren nach einem der Ansprüche 1 bis 9, das aufweist:
Erzeugen eines Polygonmesh von R-Vertices durch Triangulierung mit folgenden drei Verfahrensschritten:
Aa) Bilden einer Menge von Vertices, durch Zusammenfassen der 3D-Color-Vertices und der 3D-Geometrie-Vertices, die nachstehend als R-Vertices bezeichnet werden;
Ab) Zuordnen eines nächsten Nachbarn (NN-Vertex) im Lead-Mesh zu jedem R-Vertex, wobei die NN-Definition auf einem geeigneten Distanzmass, vorzugsweise der euklidischen Distanz, beruht;
Ac) Testen, nach Berechnung des NN-Mappings, ob allen m R-Vertices genau m verschiedene Vertices des Lead-Mesh zugeordnet werden;
Ad) Erhöhen der Auflösung lokal in einer Nachbarschaft um diesen NN-Vertex im Falle eines Mappings mehrerer R-Vertices auf denselben NN-Vertex mittels einfacher, interpolierender Subdivision, wobei vorzugsweise jedes Dreieck des Lead-Mesh, welches mit diesem NN-Vertex verbunden ist, in mehrere kleinere Dreiecke unterteilt wird;
Ae) Durchführen eines erneuten Mapping in dieser Nachbarschaft und für die beteiligten R-Vertices, bis die Bedingung der Eindeutigkeit erfüllt ist;
Af) Einsetzen jedes R-Vertex anstelle eines NN-Vertex in das Lead-Mesh;
Ba) Bestimmen der NN-Vertices aus der Menge der R-Vertices für alle Vertices des Lead-Mesh;
Bb) Vereinen aller Vertices des Lead-Mesh mit ihren zuvor berechneten NN, wobei vorzugsweise die 3D-Koordinaten (x,y,z) eines Lead-Mesh Vertex durch die Koordinaten seines jeweiligen NN aus der Menge der R-Vertices ersetzt werden.; und
C) Entfernen der überflüssigen singulären Dreiecke durch eine Re-Indizierung unter Beibehaltung der Konnektivität des Lead-Mesh für die R-Vertices, so dass sich ein vollständiges neues 3D-Polygonnetz ergibt, welches nur noch die R-Vetrtices enthält.

11. Verfahren nach Anspruch 10, sofern von einem der Ansprüche 4 bis 9 abhängig, das aufweist:
Zuordnen von Farben zu den 3D-Geometrie-Vertices in der Menge der R-Vertices, die sich durch Projektion in die dem jeweiligen View zugeordnete Bildebene ergeben.

12. Verfahren nach einem der Ansprüche 1 bis 11, das aufweist:
Anwenden von Erkennungsverfahren in den zweidimensionalen Abbildungen, bevorzugt Kamerabildern, zum Detektieren von Regions of Interest, ROI und zur individuellen Realisierung der Geometrieauflösung und Texturauflösung in diesen Regionen.

13. Verfahren nach einem der Ansprüche 5 bis 9, sowie nach einem der Ansprüche 10 bis 12, sofern von einem der Ansprüche 5 bis 9 abhängig, das aufweist:
Realisieren von Spezialeffekten in den erkannten Regions of Interest, ROI vorzugsweise künstliche Geometrien und Texturverläufe eines Objekts, wie ein in Form und/oder Größe verändertes Körperteil beispielsweise eine Nase einer Person oder Änderung der Augenfarbe einer Person durch das Einsetzen entsprechender künstlicher 3D-Color-Vertices und Verwendung lokal modifizierter Tiefenkarten.

14. Vorrichtung zum Durchführen eines Verfahrens nach einem der Ansprüche 1 bis 13.

## Claims

1. A computer-implemented method for re-meshing polygonal 3D-models in vertex-based texture mapping for visualising dynamic objects designed as polygonal 3D-models in 3D-videos, comprising the steps of:
a) generating a set of 3D-geometry vertices from 3D-vertices from a provided initial lead-mesh of a polygonal 3D-model of an object;
b) generating a set of 3D-colour-vertices from a number of M individual object views, wherein the M individual object views are two-dimensional object views; and
c) performing re-meshing for generating a new polygon mesh based on the 3D-geometry-vertices and 3D-colour vertices,
the method further comprising:
a) determining 2D-colour-vertices from 2D-points of the M individual views obtained by means of a colour function;
b) determining the 3D-colour-vertices by projecting the 2D-colour-vertices into the 3D-space by using depth maps calculated from the initial lead-mesh;
c) calculating the 3D-geometry vertices by reducing the lead-mesh by removing 3D-vertices or removing the 3D-vertices and shifting remaining 3D-vertices using a geometrical criterion that is optimised; and
d) assigning colour values to the 3D-geometry vertices from the individual views.

2. The method of claim 1, wherein:
each number of 3D-geometry-vertices in specific areas is determined by predetermined minimum requirements on the geometric resolution, and/or
the number of 3D-colour-vertices in specific areas is determined by predetermined minimum requirements on a desired texture resolution.

3. The method of claim 1 or 2,
wherein the 2D-colour-vertices are obtained from the 2D-points of the M individual views by piecewise linear approximation of the colour function of two-dimensional mappings of the object.

4. The method of any of claims 1 to 3, comprising the steps of:
(a) providing the M individual views, each of which are preferably camera images of one of M calibrated cameras;
(b) assigning a two-dimensional mapping of a camera from an amount of M cameras to each vertex of the lead-mesh, based on a decision criterion which camera provides an optimum texture information for each vertex, wherein a corresponding label is assigned to each vertex and the vertices having the same label are termed a view, preferably with a method based on Markov random fields;
(c) projecting all vertices of a view into the image plane of the respective camera;
(d) generating patches in the sense of immanently dense regions by a morphological close operation for each view.

5. The method of claim 4, comprising the step of:
searching the patches and detecting regions of particular interest, hereinafter ROI, that are subjected to a particular treatment as regards the geometrical resolution and/or the texture resolution.

6. The method of claim 5, comprising the step of:
generating the 2D-colour-vertices by optimal approximation of the colour function in each of the patches by a piecewise linear function, wherein preferably suitable parameters are provided for setting each desired texture resolution and optionally specific parameters are provided for setting the desired texture resolution of each ROI, wherein these parameters are preferably initially preset once.

7. The method of any of claims 4 to 6, comprising the steps of:
(a) calculating a depth map for each view using the initial lead-mesh, by means of a graphics application, preferably by means of an OpenGL API;
(b) assigning a depth value for each image point of each view with respect to the 3D-camera coordinate system of each view, preferably with respect to a common 3D-camera coordinate system;
(c) generating the three-dimensional colour-vertices by rear projection of the 2D-scan points of each view based on the respective image coordinates and the assigned depth according to perspective projection equations.

8. The method of claim 7, comprising the steps of:
providing and/or generating modified, preferably locally modified depth maps that are preferably usable for generating artificial geometries.

9. The method according to any of claims 5 to 8, comprising the steps of:
(a) determining 3D-vertices of the initial lead-mesh pertaining to the ROI;
(b) projecting each 3D-vertex determined in step (a) into the camera plane assigned according to the respective patch; and
(c) labelling each 3D-vertex corresponding to the ROI comprising the projected point; wherein preferably
(d) the position of labelled 3D-vertices of the lead-mesh is changed and/or new 3D-vertices are added or removed which are preferably usable for generating artificial geometries.

10. The method according to any of claims 1 to 9, comprising the step of:
generating a polygon mesh of R-vertices by triangulation, comprising the following three method steps:
Aa) forming a set of vertices by combining the 3D-colour-vertices and the 3D-geometry-vertices, hereinafter R-vertices;
Ab) assigning a next neighbour (NN-vertex) in the lead-mesh to each R-vertex, wherein the NN-definition is based on a suitable distance measure, preferably the Euclidian distance;
Ac) upon calculating the NN-mapping, testing whether exactly m different vertices of the lead-mesh are assigned to all of m R-vertices;
Ad) locally increasing the resolution in a neighbourhood around this NN-vertex in case of a mapping of a plurality of R-vertices to the same NN-vertex by means of simple interpolating subdivision, wherein preferably each triangle of the leadmesh to which this NN-vertex is connected is subdivided into a plurality of smaller triangles;
Ae) again performing a mapping in this neighbourhood and for the involved R-vertices until the condition of uniqueness is fulfilled;
Af) inserting each R-vertex instead of an NN-vertex into the lead-mesh;
Ba) determining the NN-vertices from the set of R-vertices for all vertices of the leadmesh;
Bb) combining all vertices of the lead-mesh with their previously calculated NN, wherein preferably the 3D-coordinates (x, y, z) of a lead-mesh vertex are replaced by the coordinates of its respective NN from the set of R-vertices; and
C) removing the superfluous singular triangles by re-indexing while maintaining the connectivity of the lead-mesh for the R-vertices so that a complete new polygon 3D-mesh is formed that only comprises the R-vertices.

11. The method of claim 10, if dependent on any of claims 4 to 9, comprising the step of:
assigning colours to the 3D-geometry-vertices in the set of R-vertices obtained by projection into the image plane associated with each view.

12. The method of any of claims 1 to 11, comprising the step of:
applying detection methods in the two-dimensional mappings, preferably camera images, for detecting regions of interest, ROI, and individually realising the geometrical resolution and the texture resolution in these regions.

13. The method of any of claims 5 to 9 as well as any of claims 10 to 12, if dependent on any of claims 5 to 9, comprising the step of:
realising special effects in the detected regions of interest, ROI, preferably artificial geometries and texture progressions of an object, such as a body part having been changed in shape and/or size, e.g. a person's nose or a change in a person's eye colour, by using corresponding artificial 3D-colour-vertices and locally modified depth maps.

14. A device for implementing a method according to any of claims 1 to 13.

## Revendications

1. Procédé mis en œuvre par ordinateur pour le remaillage de modèles de polygones en 3D lors d'un texturage basé sur des sommets pour la visualisation d'objets dynamiques modélisés sous la forme de modèles de polygones en 3D dans des vidéos en 3D, comprenant les étapes suivantes :
a) la formation d'une quantité de sommets de géométrie en 3D à partir de sommets en 3D en provenance d'un maillage de fils initial mis à disposition d'un modèle de polygone en 3D d'un objet ;
b) la génération d'une quantité de sommets de couleur en 3D à partir d'un nombre M de vues individuelles de l'objet, dans lequel les M vues individuelles de l'objet sont des vues bidimensionnelles de l'objet ; et
c) l'exécution d'un remaillage pour la génération d'un nouveau réseau de polygones sur la base des sommets de géométrie en 3D et des sommets de couleur en 3D,
dans lequel le procédé comprend en outre :
a) la détermination de sommets de couleur en 2D à partir de points en 2D des M vues individuelles, qui sont obtenus au moyen d'une fonction de couleur ;
b) la détermination des sommets de couleur en 3D par la projection des sommets de couleur en 2D à l'aide de cartes de profondeur calculées à partir du maillage de fils initial dans l'espace tridimensionnel ;
c) le calcul des sommets de géométrie en 3D par la réduction du maillage de fils par le retrait de sommets en 3D ou par le retrait des sommets en 3D et le déplacement de sommets en 3D restants au moyen d'un critère géométrique qui est optimisé ; et
d) l'attribution de valeurs de couleur aux sommets de géométrie en 3D à partir des vues individuelles.

2. Procédé selon la revendication 1, dans lequel :
le nombre des sommets de géométrie en 3D dans des zones déterminées est déterminé respectivement au moyen d'exigences minimales prédéfinies en matière de résolution géométrique, et/ou
le nombre des sommets de couleur en 3D dans des zones déterminées est déterminé respectivement au moyen d'exigences minimales prédéfinies en matière de résolution de texture souhaitée.

3. Procédé selon la revendication 1 ou 2,
dans lequel les sommets de couleur en 2D à partir des points en 2D des M vues individuelles sont obtenus par une approximation linéaire par morceaux de la fonction de couleur de représentations bidimensionnelles de l'objet.

4. Procédé selon l'une quelconque des revendications 1 à 3, comprenant :
(a) la mise à disposition des M vues individuelles, qui sont de préférence des images de caméra de respectivement l'une de M caméras étalonnées ;
(b) l'attribution d'une représentation bidimensionnelle d'une caméra à partir d'une quantité de M caméras à chaque sommet du maillage de fils, au moyen d'un critère de décision indiquant quelle caméra fournit une information de texture optimale pour le sommet respectif, dans lequel une étiquette associée est attribuée à chaque sommet et les sommets avec la même étiquette sont désignés en tant que vue, de préférence avec un procédé basé sur des champs aléatoires de Markov ;
(c) la projection de tous les sommets d'une vue dans le plan d'image de la caméra respective ;
(d) la génération de patchs au sens de régions denses en soi par une opération de fermeture morphologique pour chaque vue.

5. Procédé selon la revendication 4, comprenant :
l'exploration des patchs et l'identification de régions particulièrement intéressantes, dénommées ci-après ROI, qui sont traitées de manière particulière en ce qui concerne la résolution géométrique et/ou la résolution de texture.

6. Procédé selon la revendication 5, comprenant :
la génération des sommets de couleur en 2D par une approximation optimale de la fonction de couleur dans tous les patchs par respectivement une fonction linéaire par morceaux, dans lequel, de préférence, des paramètres appropriés sont respectivement prédéfinis pour le réglage de la résolution de texture souhaitée et, de manière optionnelle, des paramètres particuliers sont respectivement prédéfinis pour le réglage de la résolution de texture respectivement souhaitée dans les ROI, dans lequel ces paramètres sont de préférence prédéfinis initialement de manière unique.

7. Procédé selon l'une quelconque des revendications 4 à 6, comprenant :
(a) le calcul d'une carte de profondeur pour chaque vue à l'aide du maillage de fils initial, au moyen d'une application graphique, de préférence au moyen d'une API OpenGL ;
(b) l'attribution d'une valeur de profondeur pour chaque point d'image de la vue respective par rapport au système de coordonnées de caméra en 3D de la vue respective, de préférence par rapport à un système de coordonnées de caméra en 3D commun ;
(c) la génération des sommets de couleur tridimensionnels par la rétroprojection des points d'échantillonnage en 2D à partir de la vue respective au moyen des coordonnées d'image respectives et de la profondeur attribuée conformément aux équations de la projection en perspective.

8. Procédé selon la revendication 7, comprenant :
la mise à disposition et/ou la génération de cartes de profondeur modifiées, de préférence modifiées localement, qui peuvent être utilisées de préférence lors de la génération de géométries artificielles.

9. Procédé selon l'une quelconque des revendications 5 à 8, comprenant :
(a) la détermination de sommets en 3D du maillage de fils initial, qui appartiennent à des ROI ;
(b) la projection de chaque sommet en 3D déterminé à l'étape (a) dans le plan de caméra attribué conformément au patch correspondant ; et
(c) le marquage de chaque sommet en 3D conformément à la ROI dans laquelle se trouve le point projeté ; dans lequel de préférence
(d) les sommets en 3D marqués du maillage de fils sont modifiés au niveau de leur position et/ou de nouveaux sommets en 3D sont ajoutés ou enlevés, qui peuvent être utilisés de préférence lors de la génération de géométries artificielles.

10. Procédé selon l'une quelconque des revendications 1 à 9, comprenant :
la génération d'un maillage de polygones de sommets R par triangulation avec les trois étapes de procédé suivantes :
Aa) la formation d'une quantité de sommets, par regroupement des sommets de couleur en 3D et des sommets de géométrie en 3D, qui sont désignés ci-après en tant que sommets R ;
Ab) l'attribution d'un voisin le plus proche (sommet NN) dans le maillage de fils à chaque sommet R, dans lequel la définition NN repose sur une mesure de distance appropriée, de préférence la distance euclidienne ;
Ac) le fait de tester, après le calcul du mappage NN, si exactement m sommets différents du maillage de fils sont attribués à l'ensemble des m sommets R ;
Ad) l'augmentation de la résolution localement dans un voisinage autour de ce sommet NN dans le cas d'un mappage de plusieurs sommets R sur le même sommet NN au moyen d'une simple sous-division d'interpolation, dans lequel de préférence chaque triangle du maillage de fils, qui est lié à ce sommet NN, est subdivisé en plusieurs triangles plus petits ;
Ae) l'exécution d'un nouveau mappage dans ce voisinage et pour les sommets R concernés, jusqu'à ce que la condition de clarté soit remplie ;
Af) l'emploi de chaque sommet R à la place d'un sommet NN dans le maillage de fils ;
Ba) la détermination des sommets NN à partir de la quantité des sommets R pour tous les sommets du maillage de fils ;
Bb) l'unification de tous les sommets du maillage de fils avec leurs NN calculés auparavant, dans lequel de préférence les coordonnées 3D (x, y, z) d'un sommet du maillage de fils sont remplacées par les coordonnées de son NN respectif à partir de la quantité des sommets R ; et
C) le retrait des triangles singuliers superflus par une réindexation tout en conservant la connectivité du maillage de fils pour les sommets R de sorte qu'il en résulte un nouveau réseau de polygones en 3D complet qui ne contient plus que les sommets R.

11. Procédé selon la revendication 10, dans la mesure où elle dépend d'une quelconque des revendications 4 à 9, comprenant :
l'attribution de couleurs aux sommets de géométrie en 3D dans la quantité des sommets R qui résultent d'une projection dans le plan d'image attribué à la vue respective.

12. Procédé selon l'une quelconque des revendications 1 à 11, comprenant :
l'application de procédés d'identification dans les représentations bidimensionnelles, de préférence des images de caméra, pour la détection de régions d'intérêt, ROI, et pour la réalisation individuelle de la résolution géométrique et de la résolution de texture dans ces régions.

13. Procédé selon l'une quelconque des revendications 5 à 9, ainsi que selon l'une quelconque des revendications 10 à 12, dans la mesure où elle dépend d'une quelconque des revendications 5 à 9, comprenant :
la réalisation d'effets spéciaux dans les régions d'intérêt, ROI, identifiées, de préférence des géométries artificielles et des tracés de texture d'un objet, comme une partie du corps modifiée au niveau de la forme et/ou de la taille, par exemple un nez d'une personne ou la modification de la couleur des yeux d'une personne par l'emploi de sommets de couleur en 3D artificiels correspondants et l'utilisation de cartes de profondeur modifiées localement.

14. Dispositif pour l'exécution d'un procédé selon l'une quelconque des revendications 1 à 13.
